# EUROPÄISCHE PATENTANMELDUNG

(11) **EP 1 372 125 A2**
(43) Veröffentlichungstag der Anmeldung: **17.12.2003**
(21) Anmeldenummer: 03012074.5
(22) Anmeldetag: 28.05.2003
(51) Int. Cl.: G08C 17/02

(54) **Batteriesystem und Verfahren zur Übertragung einer Information über eine Batterieeigenschaft**

(30) Priorität: 10.06.2002 DE 10225658
(71) Anmelder: Delphi Technologies, Inc., Troy, MI 48007 (US)
(72) Erfinder: Sobczyk, Georg, 58239 Schwerte (DE); Denkelmann, Rainer, 44625 Herne (DE)
(74) Vertreter: Manitz, Finsterwald & Partner GbR

(57) **Zusammenfassung**

Bei einem Verfahren zur Übertragung einer Information über wenigstens eine Eigenschaft einer Batterie an eine die Information empfangende Empfangseinrichtung, insbesondere bei einem Kraftfahrzeug, wird wenigstens eine Information über die Eigenschaft der Batterie berührungslos mittels elektromagnetischer Strahlung an die Empfangseinrichtung übertragen.

## Beschreibung

Die vorliegende Erfindung betrifft ein Verfahren zur Übertragung einer Information über wenigstens eine Eigenschaft einer Batterie an eine die Information empfangende Empfangseinrichtung, ein zur Durchführung des Verfahrens geeignetes Batteriesystem sowie eine zur Durchführung des Verfahrens geeignete Batterie.

Für viele Anwendungen ist es wünschenswert, Daten über Eigenschaften einer Batterie zu erhalten, die eine gegebene Vorrichtung mit Energie versorgt, um diese Information anzuzeigen oder in einer elektronischen Steuereinheit der Vorrichtung zu verwenden. Insbesondere im Kraftfahrzeugbereich kann es wichtig sein, Eigenschaften einer Autobatterie, die ein Bordnetz des Kraftfahrzeugs speist, überprüfen zu können. So sind Informationen beispielsweise über den Ladezustand der Batterie nicht nur sehr nützlich; vielmehr können solche Informationen über die Autobatterie bei Verwendung von so genannten "X-by-Wire-Systemen", wie zum Beispiel einer elektronischen Lenkung, einem elektronischen Gaspedal oder einer elektronischen Bremse, auch sicherheitsrelevant sein, da eine solchen elektronische Steuerung nur bei einer stabilen Stromversorgung zuverlässig arbeitet.

Weist die Batterie eine in sie integrierte Schaltung auf, um entsprechende Eigenschaften der Batterie zu erfassen, kann die Information über eine separate Verbindung an eine zentrale Steuereinheit des Kraftfahrzeugs als Empfangseinrichtung zur weiteren Auswertung übermittelt werden. Hierzu sind zusätzliche Verbindungen zwischen der Batterie und der zentralen Steuereinheit notwendig. Diese erhöhen jedoch die Gesamtsystemkosten, da nicht nur entsprechende Steckverbinder und Kabel vorgesehen sein müssen, sondern auch die Herstellung der Verbindung beim Zusammenbau des Kraftfahrzeugs erhebliche Kosten verursacht.

Es ist auch möglich, die Informationen durch eine Modulation der von der Batterie abgegebenen Spannung zu übertragen, wozu in der zentralen Steuereinheit eine entsprechende Demodulationsvorrichtung vorgesehen sein muss. Eine solche Übertragung von Informationen ist jedoch sehr störanfällig, da in einem Kraftfahrzeug viele elektrische Störquellen vorhanden sind, die die Modulationssignale stören und so die Zuverlässigkeit der Informationsübertragung herabsetzen können. Dies ist insbesondere im Hinblick auf die bereits erwähnten "X-by-Wire-Systeme" problematisch.

Der vorliegenden Erfindung liegt die Aufgabe zugrunde, ein Verfahren zur Übertragung einer Information über eine Eigenschaft einer Batterie an eine die Information empfangende Empfangseinrichtung bereit zu stellen, das keine hohen Systemkosten verursacht und eine hohe Zuverlässigkeit der Informationsübertragung gewährleistet. Weiterhin soll eine entsprechende Batterie und ein entsprechendes Batteriesystem bereitgestellt werden.

Die Aufgabe wird gelöst durch ein Verfahren mit den Merkmalen des Anspruchs 1.

Bei dem erfindungsgemäßen Verfahren zur Übertragung einer Information über wenigstens eine Eigenschaft einer Batterie an eine die Information empfangende Empfangseinrichtung, insbesondere bei einem Kraftfahrzeug, wird wenigstens eine Information über die Eigenschaft der Batterie berührungslos mittels elektromagnetischer Strahlung an die Empfangseinrichtung übertragen.

Die Aufgabe wird weiterhin gelöst durch eine Batterie mit den Merkmalen des Anspruchs 12, die zur Verwendung bei dem erfindungsgemäßen Verfahren geeignet ist.

Die erfindungsgemäße Batterie, bei der es sich insbesondere um eine Batterie für ein Kraftfahrzeug handeln kann, weist eine Übertragungseinrichtung zur berührungslosen Übertragung einer Information über wenigstens eine Eigenschaft der Batterie mittels elektromagnetischer Strahlung auf.

Die Aufgabe wird weiterhin gelöst durch ein Batteriesystem mit den Merkmalen des Anspruchs 23, mit dem das erfindungsgemäße Verfahren durchführbar ist.

Das erfindungsgemäße Batteriesystem, das insbesondere zur Verwendung in einem Kraftfahrzeug ausgebildet sein kann, weist eine erfindungsgemäße Batterie und eine Empfangseinrichtung zum Empfang der von der Übertragungseinrichtung ausgesendeten Information auf.

Als Batterie können beliebige Batterietypen, insbesondere Batterien für Kraftfahrzeuge, beispielsweise Blei-Säure-Batterien, verwendet werden. Die Batterie können weiterhin eine oder mehrere Akkumulatorzellen aufweisen und wieder aufladbar sein. Es können jedoch auch nicht wiederaufladbare Batterien verwendet werden.

Erfindungsgemäß wird eine Information über die Eigenschaft der Batterie mittels elektromagnetischer Strahlung berührungslos an eine die Information empfangende Empfangseinrichtung übertragen.

Zur Übertragung ist eine entsprechende Übertragungseinrichtung erforderlich, die die Information in Form von elektromagnetischer Strahlung abstrahlt. Die erfindungsgemäße Batterie weist eine solche Übertragungseinrichtung auf, mittels derer entsprechende Signale, in denen die Information über eine Eigenschaft der Batterie kodiert ist, in Form von elektromagnetischer Strahlung aussendbar sind. Zweckmäßigerweise ist dabei die Übertragungseinrichtung in einem Gehäuse der Batterie angeordnet, so dass beim Einsetzen der erfindungsgemäßen Batterie in ein Gerät oder insbesondere ein Kraftfahrzeug nur ein Bauteil einzubauen ist. Darüber hinaus kann hierdurch bei einer möglicherweise vorhandenen Anisotropie der Abstrahlcharakteristik der Übertragungseinrichtung die Übertragungseinrichtung besonders einfach ausgerichtet werden.

Bei der die Information empfangenden Empfangseinrichtung kann es sich um einen beliebigen Empfänger handeln, mit dem die zur Übermittlung der Information verwendete elektromagnetische Strahlung der Übertragungseinrichtung empfangbar ist. Insbesondere weist das erfindungsgemäße Batteriesystem zum Empfang der ausgesendeten Signale eine Empfangseinrichtung auf, die zum Empfang der Signale der Übertragungseinrichtung ausgebildet ist.

Zur Übertragung der Information sind die Übertragungseinrichtung der erfindungsgemäßen Batterie und die Empfangseinrichtung so zueinander angeordnet, dass von der Übertragungseinrichtung abgegebene elektromagnetische Strahlung im zur Übertragung verwendeten Frequenzbereich von der Empfangseinrichtung empfangbar ist.

Durch die berührungslose Übertragung werden zum einen Störeinflüsse weitgehend reduziert, die beispielsweise bei Übertragung der Informationen durch Modulation der Batteriespannung, beispielsweise durch andere an die Batterie angeschlossene Verbraucher, auftreten können.

Zum anderen ist der Einbau einer erfindungsgemäßen Batterie, beispielsweise in ein Kraftfahrzeug, wesentlich vereinfacht, da keine zusätzlichen Verbindungen zwischen Batterie und Empfangseinrichtung hergestellt werden müssen. Dies senkt die Kosten für das Gesamtsystem deutlich.

Weiterbildungen und bevorzugte Ausführungsformen der Erfindung sind in den Ansprüchen, der Beschreibung und den Zeichnungen beschrieben.

Die Information kann in beliebiger Weise, beispielsweise mit bekannten Modulationsverfahren, wie zum Beispiel Frequenz-, Amplitudenmodulation übertragen werden. Dies kann in analoger Form geschehen. Zweckmäßig werden die Informationen jedoch digital übertragen, wobei eine zur Übertragung verwendete Schnittstelle vorzugsweise Mechanismen zur Fehlererkennung und/oder -korrektur bereitstellt. Beispielsweise können Schnittstellen wie eine V24-Schnittstelle oder Erweiterungen davon verwendet werden. Es können dann insbesondere für digitale Übertragungen geeignete Modulationsverfahren verwendet werden.

Grundsätzlich kann erfindungsgemäß elektromagnetische Strahlung beliebiger Wellenlänge bzw. Frequenz verwendet werden. Bei einer Ausführungsform des erfindungsgemäßen Verfahrens ist es bevorzugt, dass eine Frequenz der elektromagnetischen Strahlung im Bereich der Radiofrequenzen verwendet wird. Bei der erfindungsgemäßen Batterie ist es dazu bevorzugt, dass die Übertragungseinrichtung zur Übertragung der Information einen Sender mit einer Sendefrequenz im Radiofrequenzbereich aufweist. Die Empfangseinrichtung des erfindungsgemäßen Batteriesystems ist dementsprechend bevorzugt zum Empfang von elektromagnetischer Strahlung entsprechender Radiowellen ausgebildet. Die Radiofrequenzen liegen vorzugsweise in einem Bereich zwischen 10 kHz und 500 MHz. Insbesondere Radiofrequenzen oberhalb von 100MHz befinden sich weit oberhalb der sonst in Kraftfahrzeugen auftretenden Frequenzen, so dass auch von anderen Einrichtungen des Kraftfahrzeugs abgegebene elektromagnetische Störstrahlung die Informationsübertragung nicht beeinträchtigt.

Um eine Beeinflussung des Radioempfangs in einem Kraftfahrzeug zu vermeiden, ist es besonders bevorzugt, dass als eine Trägerfrequenz der elektromagnetischen Strahlung eine frei verwendbare Radiofrequenz, vorzugsweise von 125 kHz, 13,56 MHz oder besonders bevorzugt 433 MHz verwendet wird.

Zur Übertragung kann die erfindungsgemäße Batterie dazu einen von ihr gespeisten Sender aufweisen. Bei der erfindungsgemäßen Batterie ist es jedoch bevorzugt, dass die Übertragungseinrichtung einen Transponder aufweist, mit dem die Information übertragbar ist. Die Empfangseinrichtung des erfindungsgemäßen Batteriesystems ist dann vorzugsweise zur Wechselwirkung mit einem Transponder ausgebildet. Insbesondere können bereits bekannte Transpondersysteme, die typischerweise bei 125 kHz, 13,56 MHz oder insbesondere für den Kraftfahrzeugbereich bei 433 MHz arbeiten, verwendet werden. Die Verwendung von Transpondern hat den Vorteil, dass sie keine eigene Energieversorgung benötigen, und daher auch bei einem Totalausfall der Batterie noch zur Abgabe von Informationen in der Lage sind.

Alternativ ist es bevorzugt, dass bei dem erfindungsgemäßen Verfahren eine Frequenz der elektromagnetischen Strahlung im Mikrowellenbereich verwendet wird. Bei der erfindungsgemäßen Batterie ist es dazu bevorzugt, dass die Übertragungseinrichtung zur Übertragung der Information einen Sender mit einer Sendefrequenz im Mikrowellenbereich, vorzugsweise zwischen 2,3 GHz und 2,5 GHz, aufweist. Bevorzugt ist die Empfangseinrichtung des erfindungsgemäßen Batteriesystems zum Empfang von Mikrowellen im entsprechenden Frequenzbereich ausgebildet. Die Verwendung von Mikrowellen ist insbesondere in der Kraftfahrzeugtechnik vorteilhaft, da in einem Fahrzeug in der Regel keine Quellen für elektromagnetische Störstrahlung in diesem Frequenzbereich vorhanden sind bzw. entsprechende Störstrahlung von äußeren Quellen leicht abzuschirmen ist. Auch hier ist wieder die Verwendung von Trägerfrequenzen bevorzugt, die zur allgemeinen Verwendung freigegeben sind. Besonders bevorzugt sind Frequenzen im Bereich zwischen 2,3 GHz und 2,5 GHz,.

Besonders bevorzugt erfolgt dabei die Übertragung nach dem "bluetooth"-Standard. Bei der erfindungsgemäßen Batterie ist es dazu bevorzugt, dass die Übertragungseinrichtung zur Übertragung nach dem "bluetooth"-Standard ausgebildet ist. Ebenso ist vorzugsweise die Empfangseinrichtung des erfindungsgemäßen Batteriesystems entsprechend ausgebildet. Die Verwendung des "bluetooth"-Standards bietet eine Reihe von Vorteilen. Zum einen erfolgt die Übertragung auf einer für den allgemeinen Gebrauch freigegebenen Mikrowellenfrequenz, zum anderen stellt eine "bluetooth"-Schnittstelle Protokolle zur Datenübertragung bereit, bei denen bereits Merkmale wie eine Fehlererkennung oder Verschlüsselung implementiert sind. Darüber hinaus kann die Empfangseinrichtung gleichzeitig noch Signale anderer "bluetooth"-Sender empfangen, so dass damit gegebenenfalls die Gesamtkosten für ein Gerät und insbesondere ein Kraftfahrzeug gesenkt werden können.

Um auch an die Übertragungseinrichtung Informationen übermitteln und damit eine bidirektionale Kommunikation aufbauen zu können, ist es bei der erfindungsgemäßen Batterie bevorzugt, dass die Übertragungseinrichtung einen Empfänger für Daten- und/oder Steuersignale aufweist.

Bevorzugt weist dazu bei dem erfindungsgemäßen Batteriesystem die Empfangseinrichtung eine Sendeeinrichtung zur Übertragung von Datenund/oder Steuersignalen an die Übertragungseinrichtung auf, so dass eine bidirektionale Kommunikation zwischen der erfindungsgemäßen Batterie und der Empfangseinrichtung möglich ist.

Die Daten- und/oder Steuersignale können grundsätzlich der erfindungsgemäßen Batterie bzw. der darin enthaltenen Übertragungseinrichtung über beliebige Verbindungen zugeführt werden. Es ist jedoch bevorzugt, dass der Empfänger in der Übertragungseinrichtung zum Empfang elektromagnetischer Strahlung im gleichen Frequenzbereich ausgebildet ist, in dem die Übertragungseinrichtung bei Übertragung der Information über die Eigenschaft der Batterie arbeitet. Hierdurch werden zusätzliche physische Verbindungen von der Übertragungseinrichtung zu einer steuernden Einrichtung vermieden, so dass der Einbau einer solchen Batterie in eine Vorrichtung wie zum Beispiel ein Kraftfahrzeug keinen zusätzlichen Aufwand erfordert.

Besonders bevorzugt ist die Sendeeinrichtung in der Empfangseinrichtung des erfindungsgemäßen Batteriesystems zur Übertragung von Datenund/oder Steuersignalen mittels elektromagnetischer Strahlung ausgebildet. Vorzugsweise arbeitet die Sendeeinrichtung dabei in dem gleichen Frequenzbereich, in dem die Information über die Eigenschaft der Batterie übertragen wird.

Die Auslösung der Übertragung der Daten- und/oder Steuersignale kann dabei durch die Empfangseinrichtung oder auch vermittels der Empfangseinrichtung durch eine diese ansteuernde Einrichtung erfolgen.

In diesem Zusammenhang ist es bevorzugt, dass die erfindungsgemäße Batterie eine schaltbare Strombegrenzungseinrichtung aufweist, mittels derer auf von dem Empfänger empfangene Steuersignale hin der maximal von der Batterie abgebbare Strom begrenzbar bzw. eine bestehende Strombegrenzung wieder aufhebbar ist. Im einfachsten Fall kann es sich bei der schaltbaren Strombegrenzungseinrichtung um einen steuerbaren Schalter, beispielsweise ein Relais oder einen entsprechenden elektronischen Schalter, handeln, mit dem der maximal abgebbare Strom auf Null begrenzbar ist, so dass der Ausgang der erfindungsgemäßen Batterie abgeschaltet werden kann, wenn diese nicht benötigt wird, so zum Beispiel während des Transports, während der Montage, beispielsweise eines Kraftfahrzeugs, in das die Batterie eingebaut wird, oder bei der Wartung. Vorzugsweise wird jedoch eine Strombegrenzungseinrichtung verwendet, die den maximal abgebbaren Strom nur begrenzt. Beispielsweise kann hierzu ein entsprechender Halbleiterschalter verwendet werden. Die Strombegrenzung erfolgt dabei zweckmäßig auf einen Wert, der die Ausführung nur bestimmter vorgegebener, beispielsweise sicherheitsrelevanter, Grundfunktionen einer die erfindungsgemäße Batterie enthaltenden Vorrichtung erlaubt. So kann beispielsweise bei Verwendung in einem Kraftfahrzeug der Strom nur soweit begrenzt werden, dass für die Empfangseinrichtung und/oder wenigstens einen Teil einer zentralen Steuereinheit des Kraftfahrzeugs genügend Strom zur Ausführung von zumindest Grundfunktionen zur Verfügung steht. Dabei kann die so ausgebildete erfindungsgemäße Batterie auch zur Diebstahlsicherung eingesetzt werden, wenn beispielsweise die Strombegrenzung ein Starten einer Brennkraftmaschine nicht zulässt und nur bei Aufhebung der Strombegrenzung genügend Strom zur Betätigung eines Anlassers zur Verfügung gestellt wird.

Die Ausführungsform der Erfindung, bei der eine bidrektionale Kommunikation bereitgestellt wird, erlaubt es insbesondere bei einer bevorzugten Ausführungsform des erfindungsgemäßen Verfahrens auch, dass die Information abgefragt wird, d.h. dass eine Information über eine Batterieeigenschaft mittels eines entsprechenden Steuerbefehls zu einem beliebigen Zeitpunkt abgerufen wird, wenn diese benötigt wird.

Bevorzugt wird die empfangene Information von der Empfangseinrichtung an eine Diagnose- oder Steuereinrichtung übertragen und dort verwendet. Dazu ist es bei dem erfindungsgemäßen Batteriesystem bevorzugt, dass eine mit der Empfangsseinrichtung verbundene Diagnose- und/oder Steuereinrichtung vorgesehen ist, mit der die von der Empfangseinrichtung empfangene Information auswertbar ist. Die Empfangseinrichtung kann dabei auch in die Diagnose- und/oder Steuereinrichtung integriert sein.

Bei der Diagnoseeinrichtung kann es sich beispielsweise um ein separates Diagnose- oder Wartungsgerät zur Kontrolle der Batterie handeln, mit dem entsprechende Information als Rohdaten oder nach einer Weiterverarbeitung beispielsweise angezeigt werden können. Es ist jedoch auch möglich, die Diagnoseeinrichtung in Anzeigesysteme von Geräten, insbesondere ein Anzeigesystem für ein Kraftfahrzeug, zu integrieren. Statt der Anzeige können auch andere, beispielsweise akustische Signale zur Ausgabe von Diagnoseergebnissen verwendet werden.

Weiterhin kann die Übertragung an eine, insbesondere elektronische, Steuereinrichtung, erfolgen, die beispielsweise von der Batterie gespeiste elektrische oder elektronische Einrichtung steuert. Insbesondere kann es sich hier um eine Steuereinrichtung in einem Kraftfahrzeug handeln.

Diagnose- und Steuereinrichtung können insbesondere integriert sein.

Im Kraftfahrzeugbereich kann es sich bei der Diagnose- und/oder Steuereinrichtung insbesondere um eine zentrale Steuereinheit handeln, die verschiedene grundlegende Funktionen eines Kraftfahrzeugs steuert.

Bei dem erfindungsgemäßen Verfahren ist es bevorzugt, dass die Information während des Gebrauchs der Batterie periodisch übermittelt wird. Hierdurch können plötzlich auftretende Fehlfunktionen oder Mängel leichter erkannt werden. Bei der erfindungsgemäßen Batterie ist es dazu bevorzugt, dass die Übertragungseinrichtung eine Einrichtung zur periodischen Übermittlung der Information aufweist.

Die periodische Übermittlung der Information kann dabei zum einen autonom über die Übertragungseinrichtung erfolgen, wozu die Einrichtung zur periodischen Übermittlung der Information so ausgebildet ist, dass ohne die Vorgabe weiterer Signale die Information periodisch mittels der Übertragungseinrichtung übermittelbar ist. Insbesondere ist bei der autonomen Auslösung der Übermittlung eine bidirektionale Kommunikationsverbindung zwischen Übertragungseinrichtung und Empfangseinrichtung nicht notwendig, aber möglich.

Zum anderen ist die periodische Übertragung der Information durch Abfrage möglich. Bei dem erfindungsgemäßen Batteriesystem ist es dann bevorzugt, dass die Empfangseinrichtung oder die Diagnose- und/oder Steuereinrichtung so ausgebildet ist, dass mit ihr die Information periodisch abfragbar ist.

Weiter ist es bei dem erfindungsgemäßen Verfahren bevorzugt, dass das Verfahren bei einem Kraftfahrzeug verwendet wird, und dass die Information vor dem Start einer Antriebseinrichtung des Kraftfahrzeugs übermittelt wird. Bei dem erfindungsgemäßen Batteriesystem ist es bevorzugt, dass das System zur Verwendung in einem Kraftfahrzeug ausgebildet ist und dass die Empfangseinrichtung oder die Diagnose- und/oder Steuereinrichtung derart ausgebildet ist, dass mit ihr die Information vor einem Start einer Antriebseinrichtung des Kraftfahrzeugs abfragbar ist. Hierdurch wird es ermöglicht, vor einem Start der Antriebseinrichtung, das heißt in der Regel des Verbrennungsmotors, einen betriebssicheren Zustand der Batterie festzustellen, was insbesondere bei den bereits erwähnten "X-by-Wire-Systemen", wie einer elektronischen Lenkung, einem elektronischen Gaspedal oder einer elektronischen Bremse, von großer Bedeutung sein kann.

Bei der Eigenschaft der Batterie im Sinne der Erfindung kann es sich insbesondere um Daten über einen physischen oder Funktionszustand der Batterie handeln. So ist es bei dem erfindungsgemäßen Verfahren bevorzugt, dass Information über wenigstens eine Eigenschaft ausgewählt aus der Gruppe Batteriespannung, Batteriestrom, Temperatur, Ladezustand und Restlebensdauer der Batterie erfasst und eine der Eigenschaft entsprechende Information übertragen wird. Bei der erfindungsgemäßen Batterie ist es dazu bevorzugt, dass eine mit der Übertragungseinrichtung verbundene Einrichtung zur Erfassung von Daten in Bezug auf wenigstens eine Eigenschaft ausgewählt aus der Gruppe Batteriespannung, Batteriestrom, Temperatur, Ladezustand und Restlebensdauer der Batterie vorgesehen ist.

Je nach Eigenschaft kann die Einrichtung zur Erfassung von Daten dazu entsprechende Sensoren, beispielsweise einen Temperatursensor, mittels dessen eine Betriebstemperatur der Batterie ermittelbar ist, aufweisen. Weiterhin kann die Einrichtung je nach Art der Übertragung und der Art des Sensors Analog-Digital-Wandler umfassen, mittels derer analoge Messsignale in digitale Signale umsetzbar sind. Hierdurch ist eine sehr genaue Diagnose des Batteriezustands sowohl im Hinblick auf den augenblicklichen Betriebszustand als auch auf möglicherweise notwendige Wartungsmaßnahmen möglich.

Bei dem erfindungsgemäßen Verfahren ist es weiterhin bevorzugt, dass als Eigenschaft eine die Batterie kennzeichnende Information, vorzugsweise ein Typ und/oder eine individuelle Kennung, übertragen wird. Bei der erfindungsgemäßen Batterie ist es bevorzugt, dass eine mit der Übertragungseinrichtung verbundene Speichereinrichtung vorgesehen ist, in der eine die Batterie kennzeichnende Information, vorzugsweise ein Typ und/oder eine individuelle Kennung, speicherbar ist. Bei der die Batterie kennzeichnenden Information kann es sich nicht nur um den Typ, beispielsweise in Form einer Produktkennung, oder die individuellen Kennung, beispielsweise in Form eine Seriennummer der Batterie, handeln, sondern es kann beispielsweise auch eine Herstellerbezeichnung verwendet werden. Die Bereitstellung dieser Information über die Batterie ermöglicht es zum einen, zu überprüfen, ob der richtige Batterietyp in ein Kraftfahrzeug eingesetzt ist. Zum anderen können so gegebenenfalls erfasste Informationen über den Betriebszustand der Batterie im Hinblick auf deren Typ ausgewertet werden, wodurch eine wesentlich aussagekräftigere Diagnose des Batteriezustands ermöglicht wird. Weiterhin kann als die Batterie individuell kennzeichnende Information ein Diebstahlsicherungscode vorgesehen sein.

Um eine Manipulation der übertragenen Daten, insbesondere im Hinblick auf eine mögliche Diebstahlsicherung, verhindern zu können, ist es bei dem erfindungsgemäßen Verfahren bevorzugt, dass die Information vor der Übertragung verschlüsselt und nach der Übertragung entschlüsselt wird. Bevorzugt weist die Übertragungseinrichtung der erfindungsgemäßen Batterie dazu eine Verschlüsselungseinrichtung zur Verschlüsselung der zu übertragenden Daten auf. Bei dem erfindungsgemäßen Batteriesystem ist es darüber hinaus bevorzugt, dass die Empfangseinrichtung oder die Steuereinrichtung eine der Verschlüsselungseinrichtung entsprechende Entschlüsselungseinrichtung aufweist. Besonders bevorzugt erfolgt in dem Fall, dass eine bidirektionale Kommunikation zwischen Empfangseinrichtung und Batterie vorgesehen ist und beide sowohl über Sende- als auch Empfangsmittel verfügen, eine Verschlüsselung in beiden Übertragungsrichtungen, wozu sowohl die Übertragungseinrichtung als auch die Empfangseinrichtung oder die Diagnose- und/oder Steuereinrichtung sowohl eine Verschlüsselungs- als auch eine Entschlüsselungseinrichtung aufweisen müssen.

Die Erfindung eignet sich zwar besonders zum Einsatz in Kraftfahrzeugen, die im Sinne der Erfindung auch Nutzfahrzeuge einschließen, kann aber auch in anderen Bereichen, wie beispielsweise bei Antriebsaggregaten im allgemeinen, in der Telekommunikation, insbesondere im Mobilfunkbereich, oder in der Medizintechnik eingesetzt werden.

Die Erfindung wird nun weiter anhand der Zeichnungen beispielhaft erläutert. Es zeigen:
- Fig. 1: eine schematische Darstellung eines Kraftfahrzeugs mit einem erfindungsgemäßen Batteriesystem nach einer ersten bevorzugten Ausführungsform der Erfindung, und
- Fig. 2: eine schematische Darstellung einer Übertragungseinrichtung in dem in Fig. 1 gezeigten Batteriesystem.

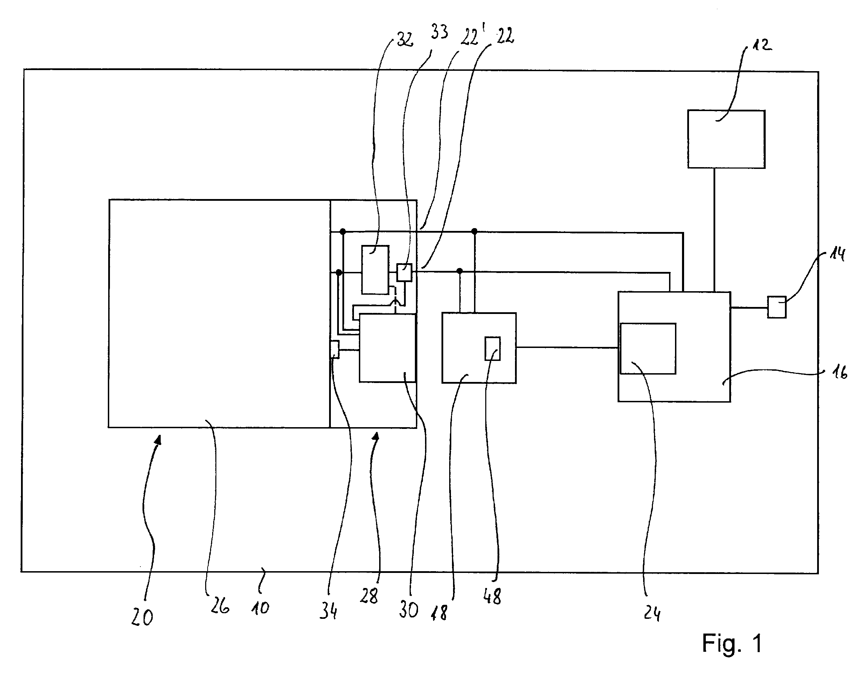

In Fig. 1 weist ein Kraftfahrzeug 10 einen Verbrennungsmotor 12, eine mit einem Zündschalter 14 verbundene zentrale Steuereinheit 16, eine Sende-/Empfangseinrichtung 18 und eine Batterie 20 auf.

Die zentrale Steuereinheit 16 ist elektrisch mit dem Zündschalter 14, der Sende-/Empfangseinrichtung 18 und dem nur sehr schematisch gezeigten Verbrennungsmotor 12, d.h. genauer mit in der Fig. 1 nicht näher gezeigten Aktuatoren und Sensoren zur Steuerung bzw. Regelung des Verbrennungsmotors und seiner ebenfalls nicht gezeigten Hilfsaggregate, verbunden.

Zur Energieversorgung sind die zentrale Steuereinheit 16 und die Sende-/Empfangseinrichtung 18 mit Ausgangsanschlüssen 22 der Batterie 20 verbunden. Weitere Verbindungen zu dem Verbrennungsmotor 12 und weiteren, nicht in Fig. 1 gezeigten Verbrauchern des Kraftfahrzeugs 10 sind der Übersichtlichkeit halber in Fig. 1 nicht gezeichnet.

Die zentrale Steuereinheit 16 ist bis auf eine in ihr ausgebildete, später beschriebene Steuereinrichtung 24 und deren Ansteuerung in konventioneller Weise ausgebildet und weist insbesondere einen Prozessor und einen damit verbundenen Speicher auf. Sie dient unter anderem zur Steuerung bzw. Regelung des Verbrennungsmotors 12 über dessen Aktuatoren und Sensoren. Weitere in dem Kraftfahrzeug 10 hierzu oder zu anderweitigen Zwecken vorhandene Sensoren oder Aktuatoren, die ebenfalls von der zentralen Steuereinheit 16 gesteuert werden, sind in der schematischen Darstellung in Fig. 1 nicht gezeigt.

Die zentrale Steuereinheit 16 ist mittels des Zündschalters 14 ein- und ausschaltbar. Weiterhin ist über den Zündschalter 14 und die zentrale Steuereinheit 16 der Verbrennungsmotor 12 startbar.

Die Energieversorgung der zentralen Steuereinheit 16, der Sende-/ Empfangseinrichtung 18 sowie aller anderen Verbraucher in dem Kraftfahrzeug 10 erfolgt über die Batterie 20 und einen in den Figuren nicht gezeigten, von dem Verbrennungsmotor 12 antreibbaren Generator, mittels dessen die Batterie 20 in konventioneller Weise aufladbar ist.

Die Batterie 20 weist in einem Gehäuse einen Akkumulatorabschnitt 26 und einen Elektronikabschnitt 28 auf.

Der Akkumulatorabschnitt 26 umfasst bis auf die Ausbildung des Gehäuses die Einrichtungen einer konventionellen Blei-Säure-Autobatterie.

Der Elektronikabschnitt 28 weist eine Übertragungseinrichtung 30, einen elektronischen, steuerbaren Strombegrenzer 32, einen Stromsensor 33, und einen Temperatursensor 34 auf.

Die Ausgangsanschlüsse 22 und 22' der Batterie 20 für Masse und Plus-Pol sind mit den entsprechenden Anschlüssen des Akkumulatorabschnitts 26 verbunden, wobei in eine mit dem Plus-Pol verbundene Leitung der steuerbare Strombegrenzer 32 und zwischen den steuerbaren Strombegrenzer 32 und den entsprechenden Ausgangsanschluss 22 der Stromsensor 33 geschaltet ist.

Der elektronische, steuerbare Strombegrenzer 32 ist zum Empfang von Steuersignalen mit seinem Steuereingang mit der Übertragungseinrichtung 30 verbunden und so über diese steuerbar.

Der elektronische, steuerbare Strombegrenzer 32 umfasst eine Schaltung, beispielsweise einen entsprechenden Halbleiterschalter, mittels derer auf entsprechende Steuersignale hin ein Strom, der durch den Strombegrenzer 32 fließt, auf einen vorgegebenen Maximalwert begrenzbar ist. Auf ein entsprechendes anderes Steuersignal hin ist die Begrenzung des Stroms auf den Maximalwert wieder aufhebbar. Der Maximalwert ist dabei so gewählt, dass ein Betrieb der Sende-/Empfangseinrichtung 18 und der zentralen Steuereinheit 16 sowie weiterer sicherheitsrelevanter elektrischer bzw. elektronischer Einrichtungen in dem Kraftfahrzeug 10 zumindest in Grundfunktionen möglich ist, ein Starten des Verbrennungsmotors 12 jedoch nicht erfolgen kann.

Der Stromsensor 33 umfasst einen Hall-Sensor zur Erfassung des von der Batterie 20 abgegebenen Stroms und ist zur Übertragung entsprechender Stromsensorsignale wie auch zur Versorgung von Spannung mit der Übertragungseinrichtung 30 verbunden. Bei anderen Ausführungsformen können als Stromsensoren statt des Hall-Sensors auch andere, vorzugsweise auf der Basis von Magnetfeldern arbeitende Sensoren verwendet werden.

Der Temperatursensor 34 ist gut wärmeleitend mit dem Akkumulatorabschnitt 26 verbunden und dient zur Erfassung einer Temperatur des Akkumulatorabschnitts 26. Der Temperatursensor 34 ist zur Übertragung entsprechender Temperatursensorsignale wie auch zur Versorgung mit Spannung mit der Übertragungseinrichtung 30 verbunden.

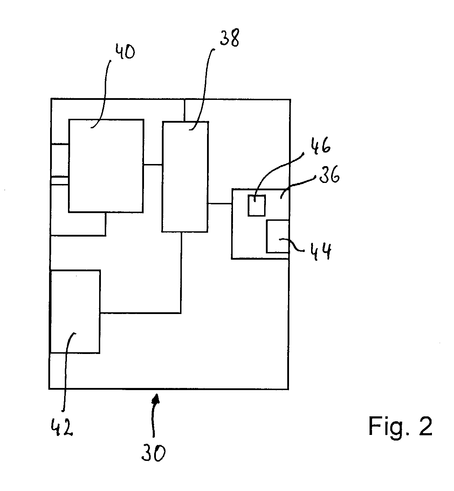

Die Übertragungseinrichtung 30 ist genauer in Fig. 2 gezeigt. Sie weist ein Sende-/Empfangsmodul 36, eine damit verbundene Steuerschaltung 38, eine mit der Steuerschaltung 38 verbundene Erfassungsschaltung 40 und eine mit der Steuerschaltung 38 verbundene Speichereinrichtung 42 auf.

Die Erfassungsschaltung 40 weist zwei mit den Anschlüssen des Akkumulatorabschnitts 26 verbundene Eingänge, einen mit dem Stromsensor 33 verbundenen Eingang, einen weiteren mit dem Temperatursensor 34 verbundenen Eingang sowie einen Ausgang zur Ausgabe digitaler Daten an die Steuerschaltung 38 auf.

Die Erfassungsschaltung 40 umfasst ferner den Eingängen zugeordnete, in den Figuren nicht gezeigte Analog-Digital-Wandler, mittels derer die an den Anschlüssen des Akkumulatorabschnitts 26 anliegende Spannung, das von dem Stromsensor 33 abgegebene analoge Stromsensorsignal und das von dem Temperatursensor 34 abgegebene analoge Temperatursensorsignal in entsprechende digitale Größen umsetzbar und über den Ausgang an die Steuerschaltung 38 ausgebbar sind.

In der Speichereinrichtung 42, die als nichtflüchtiger Speicher ausgebildet ist, sind eine Herstellerkennung und eine Seriennummer der Batterie 20, ein für das individuelle Kraftfahrzeug 10 spezifischer Sicherheitscode sowie weitere von der Steuerschaltung 38 verwendete Daten, beispielsweise in Bezug auf die Lebensdauer der Batterie 20, gespeichert. Der für das individuelle Kraftfahrzeug 10 spezifische Code wird bei dem Ersteinbau der Batterie 20 in das Kraftfahrzeug 10 in der Speichereinrichtung 42 gespeichert, während Herstellerkennung und Seriennummer bereits beim Hersteller der Batterie in die Speichereinrichtung 42 eingespeichert werden.

Die Steuerschaltung 38 ist zum einen zur Abfrage von Informationen von der Erfassungsschaltung 40 und aus der Speichereinrichtung 42 auf Abfragebefehle von dem Sende-/Empfangsmodul 34 und zur Bestimmung eines Ladezustands und einer Restlebensdauer unter anderem in Abhängigkeit von der abgefragten Spannung, dem abgefragten Strom und der abgefragten Temperatur, sowie weiterer in der Speichereinrichtung 42 gespeicherter Daten ausgebildet. Diese Informationen sind dann an das Sende-Empfangsmodul 36 übertragbar.

Zum anderen ist die Steuerschaltung 38 so eingerichtet, dass mit ihr auf Signale des Sende-/Empfangsmoduls 34 hin der elektronische Strombegrenzer 32 zwischen dem strombegrenzenden Zustand und dem den Strom nicht begrenzenden Zustand hin- und herschaltbar ist.

Das Sende-/Empfangsmodul 36 umfasst als eigentliche Sende- und Empfangsmittel einen konventionellen Transponder 44 mit einer Übertragungsfrequenz von 433 MHz. Weiterhin umfasst das Sende-/Empfangsmodul 36 eine erste Ver- und Entschlüsselungsvorrichtung 46, mittels derer von der Steuerschaltung 38 zugeführte Daten vor Übergabe an den Transponder 44 verschlüsselbar sind und mittels derer von dem Transponder 44 empfangene Daten vor Weitergabe an die Steuerschaltung 38 entschlüsselbar sind.

Der Transponder 44 wird in konventioneller Weise von der Sende-/Empfangseinrichtung 18 mit Energie versorgt. Die Erfassungsschaltung 40, die Steuerschaltung 38 und die Speichereinrichtung 42 sind von dem Akkumulatorabschnitt 26 mit Energie versorgt.

Die Sende-/Empfangseinrichtung 18 ist zur berührungslosen Wechselwirkung mit dem Transponder 44 in dem Sende-/Empfangsmodul 36 in an sich bekannter Weise ausgebildet und weist insbesondere in den Figuren nicht explizit gezeigte, entsprechende Sende-/Empfangsmittel auf.

Zur Kommunikation wird bis auf die Verschlüsselung eine V24-Schnittstelle verwendet.

Die Sende-/Empfangseinrichtung 18 umfasst zusätzlich eine zweite Verund Entschlüsselungseinrichtung 48, die der ersten Ver- und Entschlüsselungseinrichtung 46 entspricht, so dass zwischen der Übertragungseinrichtung 30 und der Sende-/Empfangseinrichtung 18 zu übertragende Informationen zunächst verschlüsselbar und dann nach Übertragung wieder entschlüsselbar sind.

Die Steuereinrichtung 24 der zentralen Steuereinheit 16 dient zum Empfang von Informationen von der Sende-/Empfangseinrichtung 18 und zur weiteren Auswertung dieser Informationen sowie Weitergabe an die zentrale Steuereinheit 16.

Darüber hinaus ist die Steuereinrichtung 24 dazu eingerichtet, Befehle der zentralen Steuereinheit 16 in Befehle für das Sende-/Empfangsmodul 34 der Übertragungseinrichtung 30 umzusetzen und an die Sende-/ Empfangseinrichtung 18 weiterzuleiten.

So ist die Steuereinrichtung 24 dazu ausgebildet, bei Einschalten des Zündschalters 14 ein Startabfragesignal und je nach Ergebnis der Abfrage ein Einschaltsignal über die Sende-/Empfangseinrichtung 18 an die Batterie 20 zu übermitteln. Entsprechend ist sie dazu ausgebildet, bei Abschalten des Zündschalters 14 ein Abschaltsignal an die Batterie 20 zu übermitteln.

Weiterhin ist die Steuereinrichtung dazu ausgerichtet, bei eingeschaltetem Zündschalter 14 periodisch, beispielsweise jede Minute, über die Sende-/Empfangseinrichtung 18 ein Betriebsabfragesignal an die Batterie 20 zu senden.

Zum Betrieb werden die Batterie 20 und die Sende-/Empfangseinrichtung 18 so zueinander angeordnet, dass eine bidirektionale Kommunikation zwischen dem Sende-/Empfangsmodul 36 und der Sende-/Empfangseinrichtung 18 mittels der elektromagnetischen Strahlung berührungslos möglich ist.

Die Versorgung des Kraftfahrzeugs 10 mit elektrischer Energie erfolgt folgendermaßen:

Bei ausgeschaltetem Zündschalter 14 ist der elektronische Strombegrenzer 32 in einem Zustand, in dem der aus der Batterie 20 entnehmbare Strom auf den Maximalwert begrenzt ist.

Nach Betätigen des Zündschalters 14 veranlasst die zentrale Steuereinheit 16 die Steuereinrichtung 24 dazu, ein Startabfragesignal über die Sende-/ Empfangseinrichtung 18 an die Übertragungseinrichtung 30 zu senden, wozu die Sende-/Empfangseinrichtung 18 ein entsprechendes elektromagnetisches Signal mit der Transponderfrequenz von 433 MHz aussendet.

Das Signal wird von dem Transponder 44 in dem Sende-/Empfangsmodul 34 empfangen und an die Steuerschaltung 38 weitergeleitet.

Die Steuerschaltung 38 liest daraufhin Daten über die Spannung, den Strom, den Ladezustand und die Temperatur des Akkumulatorabschnitts 26 aus der Erfassungsschaltung 40 sowie die Herstellerkennung und Seriennummer der Batterie und den für das individuelle Kraftfahrzeug 10 spezifischen Sicherheitscode aus der Speichereinrichtung 42 aus und leitet diese Daten an das Sende-/Empfangsmodul 34 weiter, wo sie in der Ver- und Entschlüsselungseinrichtung 46 verschlüsselt und an den Transponder 44 übermittelt werden, der die Daten an die Sende-/Empfangseinrichtung 18 überträgt, wo sie in der zweiten Ver- und Entschlüsselungseinrichtung 48 entschlüsselt und dann an die Steuereinrichtung 24 übermittelt werden.

In der Steuereinrichtung 24 erfolgt ein Vergleich der übertragenen Daten mit entsprechenden, dort gespeicherten Referenzdaten.

Zur Überprüfung der technischen Betriebsbereitschaft werden dazu zunächst die Herstellerkennung und Seriennummer der Batterie mit vorgegebenen Daten verglichen. Wird die Batterie als zulässig zur Verwendung in dem Kraftfahrzeug 10 erkannt, werden die Daten über Spannung, Strom, Ladezustand und Temperatur mit entsprechenden Referenzwerten verglichen, die der Herstellerkennung und der Seriennummer entsprechen. Liegen die Daten jeweils innerhalb eines für den Betrieb zulässigen, durch die Referenzwerte bestimmten Bereichs, wird ein entsprechendes Bereitschaftssignal an die zentrale Steuereinheit 16 ausgegeben. Andernfalls wird an die zentrale Steuereinheit 16 ein Fehlersignal ausgegeben, das für die gefundene Abweichung charakteristisch ist.

Weiterhin wird als Diebstahlsicherung der von der Batterie 20 übertragene Sicherheitscode mit einem in der zentralen Steuereinheit 16 gespeicherten und an die Steuereinrichtung 24 übertragenen entsprechenden Sicherheitscode des Kraftfahrzeugs 10 verglichen. Bei Übereinstimmung wird ein Berechtigungssignal an die Steuereinheit 16 ausgegeben.

Nur bei Vorliegen sowohl des Berechtigungssignals als auch des Bereitschaftssignals wird nun von der zentralen Steuereinheit 16 ein Schaltsignal über die Steuereinrichtung 24 an die Sende-/Empfangseinrichtung 18 und von dort drahtlos an die Übertragungseinrichtung 30, d.h. deren Sende-/Empfangsmodul 36 übermittelt. Das Sende-/Empfangsmodul 36 sendet ein entsprechendes Signal an die Steuerschaltung 38, die wiederum ein entsprechendes Steuersignal an den Strombegrenzer 32 ausgibt. Der Strombegrenzer 32 schaltet daraufhin in einen Zustand, in dem der von der Batterie 20 abgebbare Strom nicht durch den Strombegrenzer 32 begrenzt ist und die übliche Versorgung mit elektrischer Energie gegeben ist.

Der Verbrennungsmotor 12 kann nun in üblicher Weise gestartet werden.

Bei Betrieb des Verbrennungsmotors 12 liegt ein in der zentralen Steuereinheit 16 erzeugtes Signal an der Steuereinrichtung 24 an, die dann periodische Abfragesignale über die Sende-/Empfangseinrichtung 18 an die Übertragungseinrichtung 30 sendet. Dort werden nach Weitergabe des Signals an die Steuerschaltung 38 Spannung, Strom und Temperatur sowie, hieraus berechnet, eine Restlebensdauer und der aktuelle Ladezustand der Batterie als Eigenschaften der Batterie ermittelt und über den Transponder 44 und die Sende-/Empfangseinrichtung 18 die Steuereinrichtung 24 übermittelt, in der wiederum ein Vergleich mit Referenzdaten stattfindet.

Bei Abschalten des Zündschalters 14 erzeugt die zentrale Steuereinheit 16 ein Signal, das in der Steuereinrichtung 24 zur Auslösung eines Abschaltbefehls führt, der über die Sende-/Empfangseinrichtung 18 an die Übertragungseinrichtung 30 übertragen wird und in der Steuerschaltung 38 ein Steuersignal für den Strombegrenzer 32 auslöst, das diesen in einen Zustand schaltet, in dem der von der Batterie 20 abgebbare Strom auf den Maximalwert begrenzt ist, so dass nur noch die Grundfunktionen der Sende-/Empfangseinrichtung 18 und der zentralen Steuereinrichtung 16 ausführbar, nicht mehr jedoch größere Verbraucher, wie beispielsweise ein Anlasser des Verbrennungsmotors 12, betreibbar sind. Ein Diebstahl des Fahrzeugs ist damit ausgeschlossen.

Bei einer zweiten bevorzugten Ausführungsform wird statt des Sende-/Empfangsmoduls 24 mit dem Transponder und der Ver- und Entschlüsselungseinrichtung 46 ein Sende-Empfangsmodul verwendet, das nach dem "bluetooth"-Standard arbeitet.

Weiterhin ist das Sende-/Empfangsmodul dazu ausgebildet, periodisch die Informationen über die Batterie 20 auszusenden, so dass die Steuereinrichtung 24 diese Funktion nicht mehr aufweist.

Die Sende-/Empfangseinrichtung 18 mit der Entschlüsselungseinrichtung 48 ist ebenfalls durch eine "bluetooth"-Sende- und -Empfangseinrichtung ersetzt. Die notwendige Verschlüsselung erfolgt nun standardgemäß über die von dem Bluetooth-Standard bereitgestellten Verschlüsselungsverfahren.

Die Übertragungseinrichtung 30 einschließlich des Sende-/ Empfangsmoduls 34 wird vollständig über den Akkumulatorabschnitt 26 mit Energie gespeist.

Bei einer dritten Ausführungsform wird statt des Transponders ein Radiofrequenzsender und -empfänger verwendet, der bei einer vorgegebenen Frequenz elektromagnetische Radiosignale abstrahlt oder empfängt und von dem Akkumulatorabschnitt 26 mit Spannung versorgt wird.

Die Sende-/Empfangseinrichtung 18 weist ebenfalls einen entsprechenden Radiofrequenzsender und -empfänger auf.

### Bezugszeichenliste

- 10: Kraftfahrzeug
- 12: Verbrennungsmotor
- 14: Zündschalter
- 16: zentrale Steuereinheit
- 18: Sende-/ Empfangseinrichtung
- 20: Batterie
- 22, 22': Ausgangsanschlüsse
- 24: Steuereinrichtung
- 26: Akkumulatorabschnitt
- 28: Elektronikabschnitt
- 30: Übertragungseinrichtung
- 32: elektronischer Strombegrenzer
- 33: Stromsensor
- 34: Temperatursensor
- 36: Sende-/ Empfangsmodul
- 38: Steuerschaltung
- 40: Erfassungsschaltung
- 42: Speichereinrichtung
- 44: Transponder
- 46: erste Ver- und Entschlüsselungseinrichtung
- 48: zweite Ver- und Entschlüsselungseinrichtung

## Patentansprüche

1. Verfahren zur Übertragung einer Information über wenigstens eine Eigenschaft einer Batterie (20) an eine die Information empfangende Empfangseinrichtung (18), insbesondere bei einem Kraftfahrzeug (10), bei dem
wenigstens eine Information über die Eigenschaft der Batterie (20) berührungslos mittels elektromagnetischer Strahlung an die Empfangseinrichtung (18) übertragen wird.

2. Verfahren nach Anspruch 1,
**dadurch gekennzeichnet,**
**dass** eine Frequenz der elektromagnetischen Strahlung im Bereich der Radiofrequenzen verwendet wird.

3. Verfahren nach Anspruch 1 oder 2,
**dadurch gekennzeichnet,**
**dass** als eine Trägerfrequenz der elektromagnetischen Strahlung eine frei verwendbare Radiofrequenz, vorzugsweise von 125 kHz, 13,56 MHz oder 433 MHz, verwendet wird.

4. Verfahren nach Anspruch 1,
**dadurch gekennzeichnet,**
**dass** eine Frequenz der elektromagnetischen Strahlung im Mikrowellenbereich, vorzugsweise zwischen 2,3 GHz und 2,5 GHz, verwendet wird.

5. Verfahren nach Anspruch 4,
**dadurch gekennzeichnet,**
**dass** die Übertragung nach dem "bluetooth"-Standard erfolgt.

6. Verfahren nach einem der vorhergehenden Ansprüche,
**dadurch gekennzeichnet,**
**dass** die empfangene Information von der Empfangseinrichtung (18) an eine Diagnose- und/oder Steuereinrichtung (24) übertragen und dort verwendet wird.

7. Verfahren nach einem der vorhergehenden Ansprüche,
**dadurch gekennzeichnet,**
**dass** die Information während des Gebrauchs der Batterie (20) periodisch übermittelt wird.

8. Verfahren nach einem der vorhergehenden Ansprüche,
**dadurch gekennzeichnet,**
**dass** das Verfahren bei einem Kraftfahrzeug (10) verwendet wird, und
**dass** die Information vor dem Start einer Antriebseinrichtung (12) des Kraftfahrzeugs (10) übermittelt wird.

9. Verfahren nach einem der vorhergehenden Ansprüche,
**dadurch gekennzeichnet,**
**dass** Information über wenigstens eine Eigenschaft ausgewählt aus der Gruppe Batteriespannung, Batteriestrom, Temperatur, Ladezustand und Restlebensdauer der Batterie (20) erfasst und eine der Eigenschaft entsprechende Information übertragen wird.

10. Verfahren nach einem der vorhergehenden Ansprüche,
**dadurch gekennzeichnet,**
**dass** eine die Batterie (20) kennzeichnende Information, vorzugsweise ein Typ und/oder eine individuelle Kennung, übertragen wird.

11. Verfahren nach einem der vorhergehenden Ansprüche,
**dadurch gekennzeichnet,**
**dass** die Information vor der Übertragung verschlüsselt und nach der Übertragung entschlüsselt wird.

12. Batterie, insbesondere für ein Kraftfahrzeug (10), mit
einer Übertragungseinrichtung (30) zur berührungslosen Übertragung einer Information über wenigstens eine Eigenschaft der Batterie (20) mittels elektromagnetischer Strahlung.

13. Batterie nach Anspruch 12,
**dadurch gekennzeichnet,**
**dass** die Übertragungseinrichtung (30) zur Übertragung der Information einen Sender (44) mit einer Sendefrequenz im Radiofrequenzbereich aufweist.

14. Batterie nach Anspruch 12 oder 13,
**dadurch gekennzeichnet,**
**dass** die Übertragungseinrichtung (30) einen Transponder (44) aufweist, mit dem die Information übertragbar ist.

15. Batterie nach Anspruch 12,
**dadurch gekennzeichnet,**
**dass** die Übertragungseinrichtung (30) zur Übertragung der Information einen Sender mit einer Sendefrequenz im Mikrowellenbereich, vorzugsweise zwischen 2,3 GHz und 2,5 GHz, aufweist.

16. Batterie nach Anspruch 15,
**dadurch gekennzeichnet,**
**dass** die Übertragungseinrichtung (30) zur Übertragung nach dem "bluetooth"-Standard ausgebildet ist.

17. Batterie nach einem der Ansprüche 12 bis 16,
**dadurch gekennzeichnet,**
**dass** die Übertragungseinrichtung (30) eine Einrichtung zur periodischen Übermittlung der Information aufweist.

18. Batterie nach einem der Ansprüche 12 bis 17,
**dadurch gekennzeichnet,**
**dass** die Übertragungseinrichtung (30) einen Empfänger (44) für Daten- und/oder Steuersignale aufweist.

19. Batterie nach Anspruch 18,
**dadurch gekennzeichnet,**
**dass** die Batterie eine schaltbare Strombegrenzungseinrichtung (32) aufweist, mittels derer auf von dem Empfänger (44) empfangene Steuersignale hin der maximal von der Batterie abgebbare Strom begrenzbar bzw. eine bestehende Strombegrenzung wieder aufhebbar ist.

20. Batterie nach einem der Ansprüche 12 bis 19,
**dadurch gekennzeichnet,**
**dass** eine mit der Übertragungseinrichtung (30) verbundene Einrichtung (33, 34, 40) zur Erfassung von Daten in Bezug auf wenigstens eine Eigenschaft ausgewählt aus der Gruppe Batteriespannung, Batteriestrom, Temperatur, Ladezustand und Restlebensdauer der Batterie (20) vorgesehen ist.

21. Batterie nach einem der Ansprüche 12 bis 20,
**dadurch gekennzeichnet,**
**dass** eine mit der Übertragungseinrichtung (30) verbundene Speichereinrichtung (42) vorgesehen ist, in der eine die Batterie (20) kennzeichnende Information, vorzugsweise ein Typ und/oder eine individuelle Kennung, speicherbar ist.

22. Batterie nach einem der Ansprüche 12 bis 21,
**dadurch gekennzeichnet,**
**dass** die Übertragungseinrichtung (30) eine Verschlüsselungseinrichtung (46) zur Verschlüsselung der zu übertragenden Daten aufweist.

23. Batteriesystem, insbesondere zur Verwendung in einem Kraftfahrzeug (10), mit einer Batterie (20) nach einem der Ansprüche 12 bis 22 und einer Empfangseinrichtung (18) zum Empfang der von der Übertragungseinrichtung (30) ausgesendeten Information.

24. Batteriesystem nach Anspruch 23,
**dadurch gekennzeichnet,**
**dass** die Empfangseinrichtung (18) eine Sendeeinrichtung zur Übertragung von Daten- und/oder Steuersignalen an die Übertragungseinrichtung (30) aufweist.

25. Batteriesystem nach Anspruch 23 oder 24,
**dadurch gekennzeichnet,**
**dass** eine mit der Empfangsseinrichtung verbundene Diagnoseund/oder Steuereinrichtung (24) vorgesehen ist, mit der die von der Empfangseinrichtung (18) empfangene Information auswertbar ist.

26. Batteriesystem nach einem der Ansprüche 23 bis 25,
**dadurch gekennzeichnet,**
**dass** die Empfangseinrichtung (18) oder die Diagnose- und/oder Steuereinrichtung (24) so ausgebildet ist, dass mit ihr die Information periodisch abfragbar ist.

27. Batteriesystem nach einem der Ansprüche 23 bis 26,
**dadurch gekennzeichnet,**
**dass** das Batteriesystem zur Verwendung in einem Kraftfahrzeug (10) ausgebildet ist, und
**dass** die Empfangseinrichtung (18) oder die Diagnose- und/oder Steuereinrichtung (24) derart ausgebildet ist, dass mit ihr die Information vor einem Start einer Antriebseinrichtung (12) des Kraftfahrzeugs (10) abfragbar ist.

28. Batteriesystem nach einem der Ansprüche 23 bis 27,
**dadurch gekennzeichnet,**
**dass** die Übertragungseinrichtung (30) eine Verschlüsselungseinrichtung (46) zur Verschlüsselung der zu übertragenden Information und die Empfangseinrichtung (18) oder die Diagnose- und/oder Steuereinrichtung (24) eine entsprechende Entschlüsselungseinrichtung (48) aufweist.
